# EUROPÄISCHE PATENTSCHRIFT

(11) **EP 2 129 986 B1**
(45) Veröffentlichungstag und Bekanntmachung des Hinweises auf die Patenterteilung: **07.05.2014**
(21) Anmeldenummer: 08707613.9
(22) Anmeldetag: 08.02.2008
(51) Int. Cl.: F27D 3/16, F27D 3/18, G01F 11/18, B65G 53/46

(54) **DOSIERUNG UND/ODER FÖRDERUNG VON PULVRIGEN UND/ODER RIESELFÄHIGEN FESTSTOFFEN**
DOSING AND/OR TRANSPORT OF POWDERY AND/OR POURABLE SOLIDS
DISPOSITIF DE DOSAGE ET/OU DE TRANSPORT DE MATIÈRES SOLIDES PULVÉRULENTES ET/OU APTES À L'ÉCOULEMENT

(30) Priorität: 12.02.2007 DE 102007006755
(43) Veröffentlichungstag der Anmeldung: 09.12.2009
(73) Patentinhaber: Siemens VAI Metals Technologies GmbH, 4031 Linz (AT)
(72) Erfinder: FELDHAUS, Bernd, 47178 Duisburg (DE); FELDHAUS, Thomas, 40479 Düsseldorf (DE)
(74) Vertreter: Maier, Daniel Oliver
(86) Internationale Anmeldenummer: PCT/EP2008/000968
(87) Internationale Veröffentlichungsnummer: WO 2008/098706

(56) Entgegenhaltungen:
- DE-A1- 3 422 486
- DE-C1- 19 538 622
- JP-U- 1 092 237
- US-A- 3 669 318

## Beschreibung

Die vorliegende Erfindung betrifft eine Vorrichtung zum Dosieren und/oder Fördern von pulvrigen und/oder rieselfähigen Feststoffen, insbesondere Pulver, Stäube und/oder Granulate, aufweisend ein Gehäuse mit wenigstens einem trichterförmigen Einlauf, wenigstens einem konusförmigen Auslauf und wenigstens einem, wenigstens einen Kolben geschwindigkeitsgeregelt vor- beziehungsweise zurückbewegend antreibenden Linearantrieb.

Eine gattungsgemäße Vorrichtung ist insbesondere aus der DE 195 38 622 C1 bekannt, deren Offenbarungen hiermit explizit referenziert werden.

Bei der aus der DE 195 38 622 C1 bekannten Vorrichtung steht der gesamte Innenraum der Vorrichtung während des Prozessablaufes unter einem pneumatischen Überdruck. Die durch den Arbeitskolben vorgeschobenen, gezielt zum Transport aus der Vorrichtung dosierten Mengen, fallen, bedingt durch die Erdanziehung, in einen Auslaufkonus und werden von in den Auslaufkonus geleiteten Gasmengen durch den einzigen Ausgang der Vorrichtung in eine zum Zielort führende Leitung pneumatisch gefördert. Dabei schiebt der Arbeitskolben der Vorrichtung die im Gehäuseraum vor dem Kolben liegende Feststoffsäule mit einer programmierten Vorschubgeschwindigkeit horizontal nach vorne. Bei der pneumatischen Förderung von hartem Granulat, wie z.B. Magnesium mit einer Körnung von 0,2 mm bis 1 mm, ist eine Vorrichtung gemäß der DE 195 38 622 C1 unter Berücksichtigung des Zusammendrückens (komprimieren) der Feststoffsäule weitestgehend problemlos einzusetzen. Es gibt jedoch Materialien, die sich unter Umständen nicht oder nur schlecht mit einer Vorrichtung gemäß der DE 195 38 622 C1 fördern lassen. Meistens handelt es sich bei diesen Materialen um Granulate mit Staubanteilen oder um reine Stäube. Bedingt durch den beim Vorschieben der horizontalen Feststoffsäule entstehenden Gefügedruck in der Feststoffsäule, der In alle Richtungen strahlt und somit auch an der Gehäuseinnenwand abdrückt bzw. abstützt, entstehen Widerstände, die die Weiterfahrt bzw. Bewegung des Kolbens durch zu großen Widerstand verhindern (blockieren), oder aber die Vorschubkraft des Kolbens verdichtet die Feststoffsäule dergestalt, dass die Fein- bzw. Welchanteile im Feststoff die Feststoffsäule zusammenbacken lassen und sich Klumpen bilden, die wiederum Verstopfungen In der weiterführenden pneumatischen Förderung verursachen.
Die DE 3422486 A1 beschreibt einen Dosierer zum Abgeben von körnigen oder pulverförmigen Produkten. Dabei entsteht während der Betätigung der Fördereinrichtung eine gasdurchlässige Verbindung zwischen Einlaufbereich und Auslaufbereich.
US 3 669 318 A offenbart eine Vorrichtung zur Förderung von Material, die auch unter Überdruckbedingungen verwendet werden kann. Um einen Ausgleich der Druckverhältnisse und eine gasdichte Abschottung von Einlaufbereich und Auslaufbereich zu gewährleisten, ist in der US 3 669 318 A ein komplizierter, mechanischer Antrieb mit mehreren Gestängen notwendig.
Die in JP01 092237 U beschreibt eine Vorrichtung zum Transport von Material aus einem Vorratsgefäß in einen Auslaufbereich. Während des Transportvorganges berührt das zu transportierende Material unbewegliche Teile der Vorrichtung, wodurch eine Reibung - mit den damit verbundenen Reibungsverlusten und Abriebserscheinungen - zwischen den starren und beweglichen Teilen der Vorrichtung hervorgerufen wird.

Ausgehend von diesem Problemfeld liegt der vorliegenden Erfindung die Aufgabe zugrunde, die gattungsgemäße Dosierung und/oder Förderung von pulvrigen und/oder rieselfähigen Feststoffen zu verbessern.

Zur technischen Lösung wird eine Vorrichtung gemäß Anspruch 1 vorgeschlagen. Mit der Erfindung wird eine Vorrichtung vorgeschlagen, die mechanisch durch den Vorschub eines Kolbens, der In seiner Vorschubgeschwindigkeit variabel Ist, Pulver, Stäube und/oder Granulate in einen vorzugsweise konusförmigen Auslauf (Auslaufkonus) fallen lässt, wobei der Kolben durch seine besondere Ausgestaltung das zu fördernde Material nicht vor sich herschiebt sondern In sich trägt. Erfindungsgemäß wird dabei die Fördermethode derart verändert, dass die horizontale Feststoffsäule beim Vorschieben möglichst keinem bzw. nur einem geringen Innendruck im Materialgefüge ausgesetzt ist und somit nicht oder nur geringfügig verdichtet wird. Demzufolge entstehen keine hohen Reibkräfte an der Innenwand, der Gesamtwiderstand beim Vorschieben bleibt gering, im zu fördernden Material entsteht keine Klumpenbildung und die erforderliche Antriebsleistung des Linearantriebes wird verringert.

Bei einer gattungsgemäßen Vorrichtung zum Dosieren und/oder Fördern von pulvrigen und/oder rieselfähigen Feststoffen, Insbesondere Pulver, Stäube und/oder Granulate, aufweisend ein Gehäuse mit wenigstens einem trichterförmigen Einlauf, wenigstens einem konusförmigen Auslauf und wenigstens einem, wenigstens einen Kolben geschwindigkeitsgeregelt vor- beziehungsweise zurückbewegend antreibenden Linearantrieb ist der Kolben wenigstens teilweise als Hohlkörper mit einer dem Einlauf zugewandten Öffnung und einer dem Auslauf zugewandten Öffnung ausgebildet.

In einer bevorzugten Ausgestaltung der Erfindung ist der Kolben an seiner nicht angetriebenen Selte, d.h. Insbesondere an seiner Kolbenfläche gemäß der DE 195 38 622 C1, um mindestens die Hublänge seines Arbeitsweges verlängert und ist an dem neuen, verlängerten Ende des Kolbens vorteilhafterweise eine zusätzliche Lagerung mit Abstreiffunktion vorgesehen. Zudem wird der Kolben vorteilhafterweise so ausgeführt, dass die Verlängerung einen Hohlraum bietet; in den das zu fördernde Material einfließen beziehungsweise fallen kann. Der Hohlraum ist im Querschnitt vorteilhafterweise kreisförmig, teilweise kreis- und/oder kurvenförmig mit Geraden kombiniert und/oder nur aus Geraden in Form von Vielecken bestehend.

In einer weiteren vorteilhaften Ausgestaltung der Erfindung weist der verlängerte Bereich des Kolbens in der Länge des trichterförmigen Einlaufs (Einlauftrichter) in Längserstreckungsrichtung (Längsrichtung) des Kolbens oben und/oder unten mindestens einen Längsschlitz auf. In einer alternativen und/oder ergänzenden Ausführungsform der Erfindung wird der Einlauf durch Längsschlitze und/oder durch Lochreihen ausgeführt.

Das Material, das-durch Öffnen des Einlaufs beziehungsweise Einlaufventils durch den trichterförmigen Einlauf (Einlauftrichter) den gesamten Innenraum des Gehäuses füllt, fließt auch durch die durch den oberen Schlitz des Kolbens gebildete, dem Einlauf zugewandte Öffnung des Kolbens und füllt den gesamten Innenraum des im wesentlichen als Hohlkörper ausgebildeten Kolbens. Im Vergleich zu der Vorrichtung gemäß der DE 195 38 622 C1 wird beim Fördern mit dem als Hohlkörper ausgebildeten, vorzugsweise geschlitzten Kolben das Material nicht verdichtet, da es im Kolben eingeschlossen ist und von dem Kolben förmlich getragen wird und somit Presskräfte an der Innenwand des Gehäuseraumes nicht entstehen.

Vom Antrieb des Kolbens müssen lediglich Scherkräfte aufgebracht werden, die die im Kolben eingeschlossene und axial bewegte horizontale Feststoffsäule beim Vorschieben von der im Innenraum des Gehäuses verbleibenden Materialfüllung trennen. Beim Vorschieben des Kolbens wird vorteilhafterweise der Beginn (Anfang) des Schlitzes durch das Abstreiflager, welches vorteilhafterweise auf beiden Seiten, bedingt durch eine Druckausgleichsleitung, den gleichen Druck aufweist, geschoben. Wenn der untere Schlitz aus dem Abstreiflager nur geringfügig herausragt, fließt Material aus dem Kolben, fällt in den konusförmigen Auslauf (Auslaufkonus) und wird vorteilhafterweise durch eingeleitetes Fördergas pneumatisch weiter transportiert. Feinste Stäube, die zum Fließen eine Zusammenhangskraft überwinden müssen und zu lawinenartigem Fließen neigen, werden vorteilhafterweise durch einen Fluidisierungskörper fließfähig gemacht.

Entsprechend der Kolbenvorschubgeschwindigkeit fällt mehr oder weniger Material aus dem unteren Schlitz aus dem Kolben in den Auslaufkonus und wird dort vorteilhafterweise vom eingeleiteten Transportgas in die Förderleitung zum Zielort gefördert.

Für eine kontinuierliche Förderung werden erfindungsgemäß vorteilhafterweise zwei erfindungsgemäße Vorrichtungen oder eine erfindungsgemäße Vorrichtung mit zwei Kolben verwendet beziehungsweise eingesetzt. Mit einer einzelnen Vorrichtung beziehungsweise mit einer Vorrichtung mit einem Kolben ist eine intermittierende Förderung möglich.

Weitere Einzelheiten, Merkmale und Vorteile der Erfindung werden nachfolgend anhand einer beispielhaften Funktionsbeschreibung einer kontinuierlichen Förderung der Erfindung näher erläutert:
1. Startvorbereitung:
   Beide Kolben stehen in Startstellung. Beide Kolben sind mit Material gefüllt und fahren so weit vor, bis der Anfang beziehungsweise Beginn des unteren Schlitzes (Schlitzbeginn) bündig mit dem äußeren Ende des Abstreiflagers übereinstimmt, so dass bei der geringsten Vorwärtsbewegung Material aus dem Kolben in den Auslaufkonus fallen würde.
2. Förderung:
   Ein Kolben fährt mit einer vorgegebenen Vorschubgeschwindigkeit, die vorteilhafterweise der errechneten Austragssollmenge entspricht, vor und das Material fällt aus dem unteren Schlitz des Kolbens an der damit eine Auslaufkante bildenden Kante des Abstreiflagers (= Auslaufkante) in den Auslaufkonus. Bei erreichtem Arbeitshubende, wobei das Ende des unteren Schlitzes (Schlitzende) an der Auslaufkante ankommt (= Schlitzende an der Auslaufkante), fährt der zweite Kolben mit der errechneten Vorschubgeschwindigkeit vor und übernimmt die Förderung. Der leere Kolben fährt unverzüglich nach entspanntem Innenraumdruck mit erhöhter Geschwindigkeit (Eilgeschwindigkeit) zurück. Während dieser Rückwärtsfahrt fließt Material durch das geöffnete Einlaufventil in den Einlauftrichter und durch den oberen Schlitz des Kolbens und füllt diesen gänzlich.
   Bei erreichter Startstellung fährt der Kolben, bis der untere Schlitzbeginn mit der Auslaufkante des Abstreiflagers übereinstimmt, und steht nach Druckbespannung für die weitere Förderung bereit. Somit ist eine kontinuierliche pneumatische Förderung des Materials gewährleistet. Die Übergänge von einem auf den anderen Kolben sind ohne Druckschwankungen fließend, da der Gehäusedruck durch Ventilschaltungen immer gleich dem Druck in der Förderleitung ist und der Beginn des Materialflusses vorteilhafterweise exakt bestimmbar (steuerbar) ist.

Eine besonders bevorzugte Ausgestaltung der Erfindung betrifft eine Vorrichtung zum Dosieren und/oder Fördern von pulverigen und/oder rieselfähigen Feststoffen und ist eine Weiterentwicklung der Vorrichtung gemäß der DE 195 38 622 C1. Der Innenraum des Gehäuses hat im oberen Bereich einen Einlauftrichter, der so geformt ist, dass bei ganz zurückgefahrenem Kolben und beim Öffnen des darüber angeordneten Einlaufventils sich der gesamte Innenraum im Einlaufbereich und der in diesem Bereich befindliche, durch Schlitze oben und unten geöffnete Kolben, gänzlich mit Material füllt. Auf der nicht angetriebenen Seite des Kolbens ist in Arbeitsrichtung des Kolbens hinter dem Abstreiflager der Auslaufbereich mit einem Auslaufkonus so angeordnet, dass das vorgeschobene Material in den Auslaufkonus fällt und durch in den Auslaufkonus eingeleitetes Fördergas in eine Leitung zum Zielort pneumatisch beschleunigt wird. Im Gegensatz zu der Vorrichtung gemäß der DE 195 38 622 C1 ist der Kolben Dabei nicht als Plunger ausgeführt, der mit seiner Kolbenfläche das Material vorschiebt, sondern vorteilhafterweise als Gefäß, welches das zu fördernde Material in sich aufnimmt und primär nicht schiebt sondern in sich trägt. Des Weiteren ist der Kolben bedeutend länger als der als Plunger ausgeführte Kolben gemäß der Vorrichtung gemäß der DE 195 38 622 C1. Ferner ist der Kolben zusätzlich an dem freien Ende (nicht angetriebene Seite) des Kolbens mit einem Abstreiflager gelagert und abgedichtet. Das Abstreiflager hat insbesondere die Aufgabe, den langen Kolben zu führen und den Einlaufbereich zum Auslaufbereich so abzudichten, dass kein Material durch das Lager gelangen kann. Eine Umgehung von einer zur anderen Seite des Abstreiflagers sorgt für absolute Druckgleichheit vor und hinter dem Abstreiflager, so dass insbesondere ein unkontrolliertes Durchschießen von Material ausgeschlossen ist. Der Kolbeninnenraum ist mit Trennwänden voreilhafterweise in einem Winkel, der dem Schüttwinkel des Materials entspricht, nach außen verschlossen.

Der Vorteil der erfindungsgemäßen Vorrichtung gegenüber der Vorrichtung gemäß der DE 195 38 622 C1 ist insbesondere, dass das Material nicht vom Kolben geschoben sondern getragen wird, keine Reibwiderstände an der Innenwand des Gehäuses entstehen und demzufolge auch bedeutend weniger Vorschubkraft benötigt wird. Hieraus ergibt sich keine Verdichtung des Materials, so dass die Schüttdichte von Beginn bis zum Ende eines Arbeitshubes immer locker und gleich ist. Bei der Vorrichtung gemäß der DE 195 38 622 C1 fällt das zu fördernde Material entsprechend der Verdichtung der horizontalen Feststoffsäule früher oder später in den Auslaufkonus. Der genaue Zeitpunkt des Förderbeginns ist somit nicht exakt bestimmbar und auch nicht exakt reproduzierbar.

Ein weiterer Vorteil gegenüber der Vorrichtung gemäß der DE 195 38 622 C1 besteht darin, dass der Beginn des Ausförderns exakt bestimmbar ist und vorteilhafterweise mit dem Zeitpunkt übereinstimmt, an dem der untere Schlitz des Kolbens aus dem Abstreiflager an der Auslaufkante in den Auslaufbereich gelangt. Umschaltungen von einem auf den anderen Kolben sind vorteilhafterweise übergangslos zu gewährleisten.

Erfindungsgemäß können vorteilhafterweise pulverige und/oder rieselfähige Feststoffe kontinuierlich variabel mengengeregelt pneumatisch im Flug- und/oder Dichtstrom durch eine Förderleitung einem Zielort zugeführt werden, der ein Reaktor oder ein ähnliches Gefäß ist und unter atmosphärischem Druck oder unter Überdruck steht.

In der Stahlindustrie hat die Erfindung - wie die Vorrichtung gemäß der DE 195 38 622 C1 - ihren Ursprung und findet, dort Verwendung beim Entschwefeln von Roheisen. Dabei wird vorteilhafterweise Magnesiumgranulat mit einer Körnung von etwa 0,2 mm bis etwa 0,8 mm konstant, variabel verstellbar, einer vorgegebenen Sollmenge entsprechend, gegen schwankende Drücke zwischen etwa 3,5 bar und etwa 5,5 bar in eine Roheisenschmelze injiziert. Der Erfindung fällt dabei vorteilhafterweise die erweiterte Aufgabe zu, andere Feststoffe wie z.B. Soda, Kalziumcarbid und/oder Kalk in Staub- und/oder Granulatform mengengeregelt pneumatisch in Roheisenschmelzen zu injizieren. Eine Multiinjektionsentschwefelungsanlage mit Dosierfördervorrichtungen kann im Gegensatz zu konventionellen Entschwefelungsanlagen vorteilhafterweise voll automatisch ohne Personalüberwachung betrieben werden. Die gleichmäßige Förderung sowie die Nichtberücksichtigung von erforderlichen Fließverbesserern und/oder erforderlichen Korngrößen erzielen erhebliche Verbesserungen des Wirkungsgrads gegenüber ansonsten heute gebräuchlichen unbefriedigenden und schlechten Wirkungsgraden der Entschwefelungsmittel, insbesondere des Kalziumcarbides von 0,3.

Der Erfindung fallen vorteilhafterweise vielfältige Aufgaben und/oder Anwendungen zu, wie die nachfolgenden bevorzugten Ausführungsbeispiele aufzeigen:
1.) In kleinen oder großen Wärmeerzeugern kann vorteilhafterweise Kohlenstaub temperaturgeführt mit variablen Mengen in eine Brennkammer eingeblasen werden. Bei kleinen Kraftwerken, wie z.B. Brennkammern für Wohnhauswärmeerzeugern, werden etwa 100,00 g bis etwa 1.000,00 g/h Kohlenstaub in eine Brennkammer mit Luft oder reinem Sauerstoff injiziert. Bei großen Kraftwerken werden etwa 100,00 kg bis etwa 3.500,00 kg/h und bei Bedarf auch noch mehr Kohlenstaub in eine Brennkammer mit Luft oder reinem Sauerstoff injiziert.
2.) In einen Reaktor werden feinste Kaliumchloritstäube variabel den aktuellen Produktanforderungen entsprechend von z.B. etwa 60,00 g/h bis etwa 4.000,00 g/h gegen schwankende Drücke von etwa 2,5 bar bis etwa 3,5 bar zur Erzeugung von Titandioxyd injiziert.
3.) Zur Erzeugung von Bioöl aus Biomasse wird Biomasse in einen unter etwa 70 bar stehenden Reaktor injiziert.
4.) Zum Strahlen mit feinem und/oder grobem Sand bzw. anderen Strahlmitteln.
5.) Zum Konditionieren der LD-Schlacke im Stahlwerk. Vorteilhafterweise wird mit der erfindungsgemäßen Vorrichtung mit dem Reaktions- und/oder Fördergas Sauerstoff Quarzsand in die LD-Schlacke injiziert.
6.) Zum Verbessern und/oder Beschleunigen des LD-Prozesses in der Stahlindustrie. Vorteilhafterweise werden Reagenzien, z.B. Magnesiumstäube, in kleinen Mengen variabel bestimmbar (z.B. etwa 1,00 g/min bis etwa 10,00 g/min) durch die Bodendüsen eines LD-Konverters in die Roheisen/Stahlschmelze injiziert. Beim Sauerstoffaufblasen werden durch die Reaktion der Stäube mit der Schmelze physikalische Reaktionen in der Schmelze erzeugt, die den Sauerstoffstrahlen größere Angriffsflächen auf der Schmelzbadoberfläche bieten und den Entkohlungsprozess somit beschleunigen.
7.) Zum Homogenisieren, Legieren, Aufheizen und/oder Entschwefeln einer Stahlschmelze. Hier werden vorteilhafterweise Reagenzien in Staubund/oder Granulatform durch eine Förderleitung mit abschließender Tauchlanze in die Stahlschmelze injiziert. Durch die Reaktion wird der Rührprozess beschleunigt, die Stahlschmelze feinlegiert und/oder entschwefelt und beim Aufblasen von Sauerstoff durch die Tauchlanze injiziertes Aluminium verbrannt und die Schmelze aufgeheizt.
8.) Zum Beschleunigen des RH-Prozesses in der Stahlindustrie. Vorteilhafterweise werden hier feinste Staubpartikel in kleinen Mengen (z.B. etwa 1,00 g/min bis etwa 10 g/min) mit dem Liftgas durch eine Förderleitung mit abschließenden Liftgasdüsen, die sich im Einlaufschnorchel des RH-Gefäßes befinden, injiziert. Durch die Reaktion der Stäube mit der Schmelze wir der Auftrieb der Schmelze und somit die Umlaufgeschwindigkeit der Schmelze und somit der RH-Prozess beschleunigt. Beim Aufblasen von Sauerstoff wird injiziertes Aluminium verbrannt und die Schmelze aufgeheizt.
9.) Zum Beschleunigen des Hochofen- bzw. Schachtofenprozesses in der Stahlindustrie. Durch Blasformen werden mit reinem Sauerstoff feinste Kohlenstäube ggf. in Koinjektion auch Reststoffe in Staub- und/oder Granulatform in den Ofen injiziert.

Weitere Einzelheiten, Merkmale und Vorteile der Erfindung werden nachfolgend anhand der in den Figuren der Zeichnung dargestellten Ausführungsbeispiele der Erfindung erläutert. Dabei zeigen:
- Fig. 1: eine Vorrichtung nach dem Stand der Technik (DE 195 38 622 C1);
- Fig. 2: eine erfindungsgemäße Vorrichtung mit geschlitztem Kolben;
- Fig. 3: eine Teilansicht von Fig. 2 im Schnitt mit Vorlagegefäß;
- Fig. 4: zeigt einen erfindungsgemäß geschlitzten Kolben im Schnitt mit einem eckigen Innenraum;
- Fig. 5: zeigt einen erfindungsgemäß geschlitzten Kolben im Schnitt mit einem teilweise runden Innenraum;
- Fig. 6: zeigt eine erfindungsgemäße Vorrichtung wie Fig. 2 mit einer zusätzlichen verstellbaren Fluidisierungstrennwand;
- Fig. 7: zeigt eine erfindungsgemäße Vorrichtung wie Fig. 2 mit einer anderen Einlaufgeometrie und
- Fig. 8: zeigt einen erfindungsgemäßen Kolben mit Lochreihen an Stelle von Schlitzen.

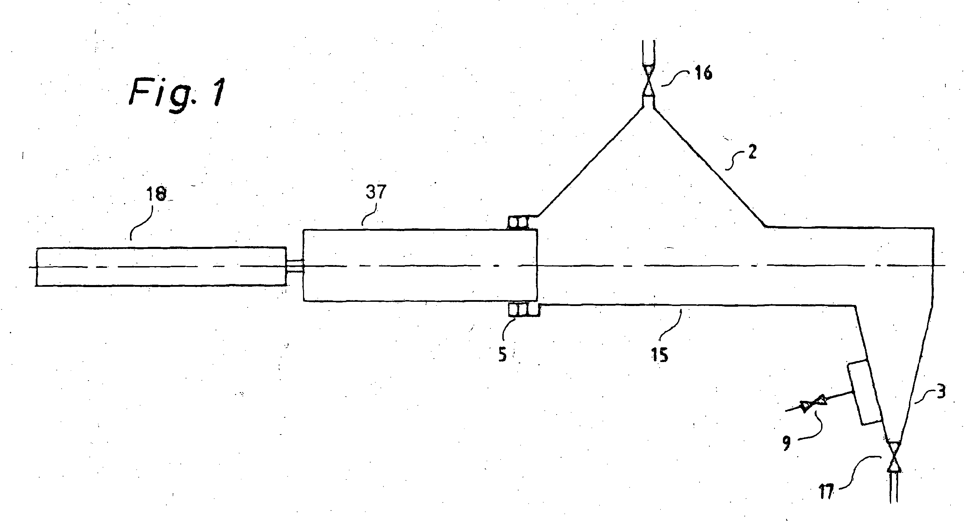

In Fig. 1 ist eine Vorrichtung dargestellt, wie sie aus dem Stand der Technik gemäß der DE 195 38 622 C1 bekannt ist. Die Vorrichtung besteht im Wesentlichen aus einem Gehäuse 15 mit Einlauftrichter 2 und Auslaufkonus 3, einem Kolben 19 mit Dichtlager 5. Durch das geöffnete Einlaufventil 16 fließt Material in das Gehäuse 15 und füllt dieses gänzlich. Nachdem das Einlaufventil 16 geschlossen ist, werden das Auslaufventil 17 und Fördergasventil 9 geöffnet und der Linearantrieb 18 schiebt den Plungerkolben 37 in das Gehäuse 15. Das vor dem Plungerkolben 37 befindliche Material im Gehäuse wird verdichtet und beginnt entsprechend der Kompressibilität der horizontalen Materialsäule und der Reibkräfte des Materials an der Innenwand des Gehäuses nach einer entsprechenden Vorschubstrecke in den Auslaufkonus zu fallen. Weiches Material bzw. Material mit hohem Feinanteil verdichtet sich so weit, dass Klumpen entstehen, die den Auslauf verstopfen aber auch den Linearantrieb durch zu hohen Widerstand blockieren. Der Plungerkolben 37 hat ein Lager, das so genannte Dichtlager 5, und arbeitet mit seiner Kolbenfläche nach dem Prinzip eines Plungers.

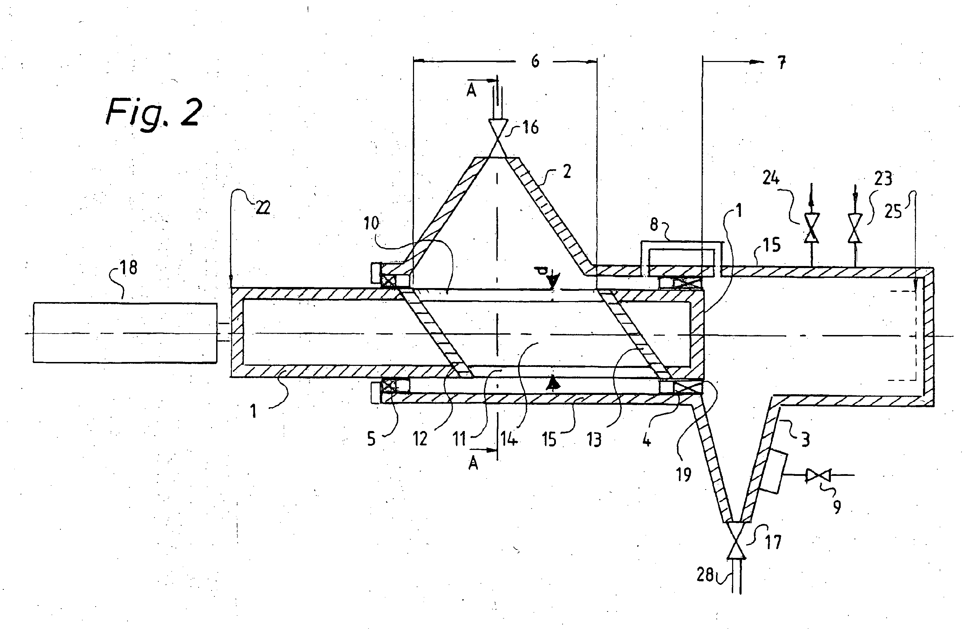

Fig. 2 ist eine bevorzugte Ausführungsform einer Vorrichtung mit erfindungsgemäß geschlitztem Kolben 1. Die Vorrichtung besteht im Wesentlichen aus dem Gehäuse 15 mit Einlauftrichter 2 und Auslaufkonus 3, dem geschlitzten Kolben 1 mit Dichtlager 5 und Abstreiflager 4. Der Unterschied zu Fig. 1 bzw. zur DE 195 38 62 besteht insbesondere darin, dass der geschlitzte Kolben 1 bedeutend länger ist als der Plungerkolben 37, nicht nach dem Plungerprinzip das Material vor sich herschiebt und bei gänzlich eingefahrenem Linearantrieb 18 seinen Kolben im Einlaufbereich 6 durch eine schlitzähnliche Öffnung öffnet, der Schlitzbereich durch die Trennwände 12 und 13 zu den Enden des geschlitzten Kolbens 1 verschlossen ist und ein zusätzliches Abstreiflager 4 aufweist. Das Abstreiflager 4 hat die Aufgabe, den geschlitzten Kolben zu lagern und zu führen und zu verhindern, dass Material am geschlitzten Kolben 1 vorbei in den Auslaufbereich 7 gelangt. Das Abstreiflager 4 ist nicht gasdruckdicht. Die Umgehung 8 sorgt für Druckgleichheit vor und hinter dem Abstreiflager 4.

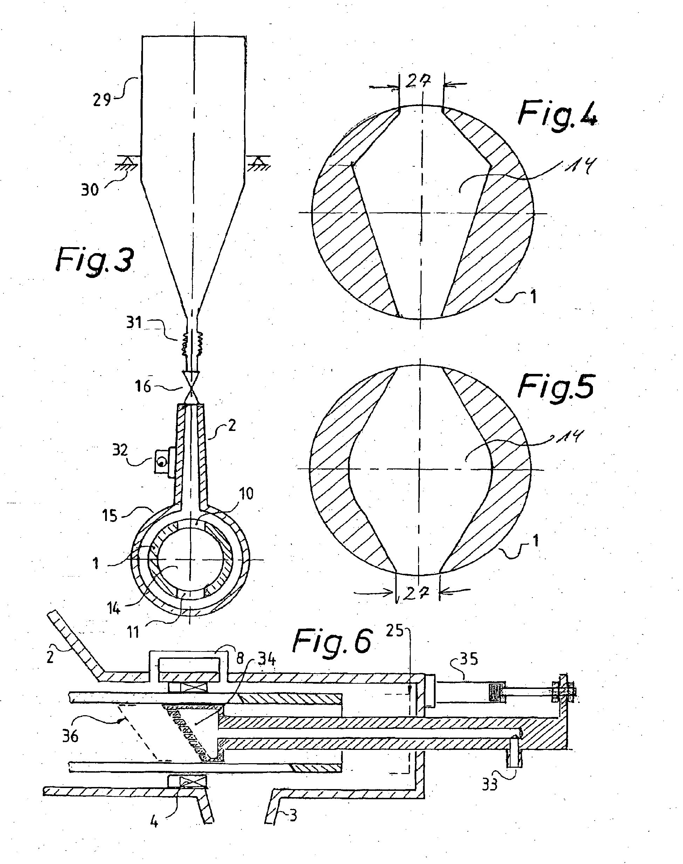

Fig. 3 zeigt Fig. 2 im Schnitt A - A und zusätzlich ein Vorlagegefäß 29, welches von der Waage 30 gewogen wird und durch den Kompensator 31 frei von Kraftnebenschlüssen ist. Das Material, welches bei einer Rückwärtsfahrt des Kolbens 1 aus dem Vorlagegefäß 29 durch das Einlaufventil 16 in die Vorrichtung fließt und somit den leeren, geschlitzten Kolben 1 füllt, wird durch die Waage 30 gewogen. Mit diesem Wiegewert kann die Materialmenge im geschlitzten Kolben bestimmt und somit auch exakt die Austragungsmenge pro Vorschubstrecke bestimmt werden. Vorteilhafterweise ist ferner vorgesehen, dass die Bestimmung der Füllmenge durch Berechnung des Volumens multipliziert mit der Schüttdichte des zu fördernden Materials ermittelt beziehungsweise bestimmt empirische bestimmt wird. Der obere Schlitz 10 im geschlitzten Kolben 1 ist der Schlitz, durch den das Material in den geschlitzten Kolben 1 fließt. Der untere Schlitz 11 ist der Schlitz, durch den das Material an der Auslaufkante 19 aus dem geschlitzten Kolben 1 herausfällt und in den Auslaufkonus 3 fällt. Die Schlitze 10 und 11 können auch als Lochreihe ausgeführt werden. Ebenfalls kann der geschlitzte Kolben 1 im Bereich der beiden Schlitze 10 und 11 rund herum mit Löchern, ähnlich einem Sieb, ausgeführt sein.

Fig. 4 zeigt eine bevorzugte Ausgestaltung des Innenraumes des geschlitzten Kolbens 1. Durch die starke Neigung der Auslaufflanken wird sichergestellt, dass das Material aus dem geschlitzten Kolben 1 gänzlich herausfließt.

Fig. 5 zeigt eine andere Ausgestaltung des Innenraumes des geschlitzten Kolbens 1. Auch hier wird durch die im Gegensatz zu dem in Fig. 3 gezeigten geschlitzten Kolbens 1 sichergestellt, dass das Material aus dem geschlitzten Kolben 1 gänzlich herausfließt.

Fig. 6 zeigt den Auslaufbereich der Vorrichtung mit einer durch den Verstellzylinder 35 verstellbaren Fluidisierungstrennwand 34. Beim Befüllen steht die Fluidisierungstrennwand 34 in der Einlaufstellung 36 und verhindert ein unkontrolliertes Verlaufen der Schüttsäule des Materials in Richtung Auslaufkante 19 und sorgt für eine definierte Lage der Schüttsäule. Vor Beginn der Förderung zieht der Verstellzylinder 35 die Fluidisierungstrennwand in gezeigte Position und der Linearantrieb 18 schiebt die gleiche Strecke den geschlitzten Kolben 1 hinterher, so dass die Schüttsäule des Materials direkt vor der Fluidisierungswand anliegt. Ab dieser Stellung beginnt die Förderung, indem die vorgeschobene Materialsäule im geschlitzten Kolben 1 durch in den Fluidisierungsanschluss 33 eingeleitetes und aus der Fluidisierungstrennwand 34 austretendes Gas aufgelockert und beschleunigt wird. Die Fluidisierungstrennwand 34 findet Anwendung bei zusammenbackenden Stäuben und/oder Pulvern zur Verhinderung von lawinenartigem und/oder pulsierendem Ausfördern des Materials.

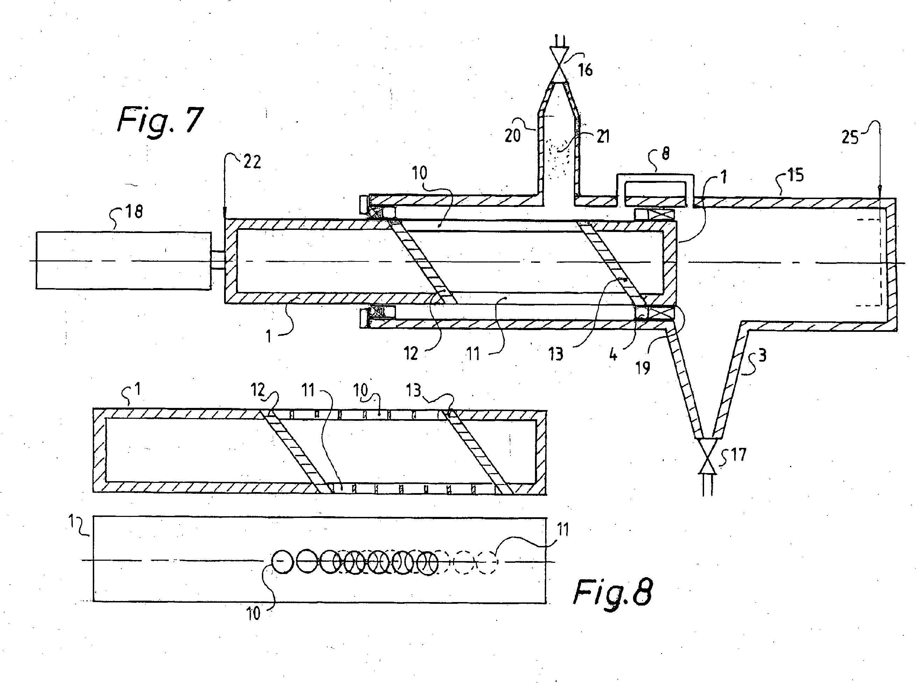

Fig. 7 ist eine weitere Ausgestaltung der Vorrichtung mit dem erfindungsgemäß geschlitzten Kolben 1. Die Vorrichtung unterscheidet sich zu der Ausführung gemäß Fig. 2 darin, dass It. Fig. 2 der Einlauftrichter 2 mit seiner Länge entsprechend des Einlaufbereiches 6 durch den Einlaufstutzen 20 ersetzt wird. Der Einlaufstutzen 20 ist eine Leitung, die den Materialeinlauf in den geschlitzten Kolben 1 örtlich und nicht auf der gesamten Schlitzlänge gewährleistet. Um den geschlitzten Kolben 1 auf seiner gesamten Länge zu befüllen, muss während der Rückwärtsfahrt das Einlaufventil 16 geöffnet sein, so dass sich der geschlitzte Kolben 1 im Vorbeifahren aus dem Einlaufstutzen 20 mit Material befüllt. Falls während der Rückwärtsfahrt der geschlitzte Kolben 1 nicht komplett mit Material gefüllt wurde, fließt Material, bedingt durch die Schwerkraft, bei geschlossenem Einlaufventil 16, während eines Arbeitshubes aus der Materialvorlage 21 in den geschützten Kolben 1 und füllt ihn gänzlich, bevor dieser Bereich durch das Abstreiflager 4 fährt und sich dahinter entleert.

Fig. 8 zeigt den geschlitzten Kolben 1 in einer weiteren Ausgestaltung an Stelle der Schlitze 10 und 11 mit einer Lochreihe. Diese Ausführung findet Anwendung bei extrem gut rieselfähigen Materialien.

Nachfolgend wird die Funktionsweise der erfindungsgemäßen Vorrichtung anhand des in Fig. 2 dargestellten Ausführungsbeispiels näher erläutert. Um einen intermittierenden Betrieb zu gewährleisten, ist eine Vorrichtung gemäß Fig. 2 erforderlich. Um einen kontinuierlichen Betrieb zu gewährleisten, sind mindesten zwei Vorrichtungen gemäß Fig. 2 erforderlich. Nachfolgend wird eine kontinuierliche Förderfunktion, d.h. mit zwei Vorrichtungen, gemäß Fig. 2 beschrieben.

Der Linearantrieb 18 ist eingefahren und der geschlitzte Kolben 1 steht in Position Startstellung 22. Das Einlaufventil 16 öffnet sich und Material fließt durch den Einlauftrichter 2 in das Gehäuse 15 und durch den oberen Schlitz 10 auf der gesamten Länge des oberen Schlitzes 10 in den geschlitzten Kolben 1. Nach einer Zeit schließt das Einlaufventil 16, das Entspannungsventil 24 und öffnet das Bespannungsventil 23 und setzt den Innenraum der Vorrichtung unter Druck. Die Umgehung 8 sorgt dafür, dass zwischen Einlaufbereich 6 und dem Auslaufbereich 7 kein Differenzdruck entsteht. Beide Linearantriebe 18 fahren so weit vor, bis der Beginn des unteren Schlitzes mit der Auslaufkante 19 übereinstimmt und noch kein Material in den Auslaufkonus 3 fällt. Beide Vorrichtungen sind zum Fördern startbereit.

Der Förderstart beginnt mit einer Vorrichtung, die zweite Vorrichtung bleibt förderbereit und wird aktiviert, wenn der Linearantrieb der ersten Vorrichtung sein Arbeitshubende 25 erreicht hat. Das Arbeitshubende 25 entspricht der Stellung, wenn das Ende des unteren Schlitzes 11 bzw. der Anfang der hinteren Trennwand 12 mit der Auslaufkante 19 übereinstimmt.

Die Austragsmenge pro Arbeitshub bzw. pro Strecke bzw. entsprechend einer Vorschubgeschwindigkeit kann empirisch, rechnerisch oder gravimetrisch ermittelt werden.

Der Linearantrieb 18 einer Vorrichtung fährt mit einer bestimmten Geschwindigkeit, der Sollaustragsmenge entsprechend, vor. Gleichzeitig schließt das Bespannungsventil 23 und öffnen das Auslaufventil 17 und das Fördergasventil 9. Material fällt aus dem Kolbeninnenraum 14 an der Auslaufkante 19 in den Auslaufkonus 3 und fließt, getragen und beschleunigt vom Fördergas, in die Förderleitung 28 zum Zielort. Bei erreichtem Arbeitshubende 25 wird eine Schnellumschaltung auf die andere Vorrichtung eingeleitet.

An der in Bereitschaft stehenden Vorrichtung fährt der Linearantrieb 18 mit einer bestimmten Geschwindigkeit vor und gleichzeitig schließt das Bespannungsventil 23 und öffnen das Auslaufventil 17 und das Fördergasventil 9. Material fällt aus dem unteren Schlitz 11 an der Auslaufkante 19 in den Auslaufkonus 3 und die Förderung wird ohne Unterbrechung weitergeführt.

Mit der Schnellumschaltung schließt an der leer geförderten Vorrichtung das Auslaufventil 17 und das Entspannungsventil 24 öffnet. Nach einer Wartezeit, in der der Innendruck entspannt wird, öffnet das Einlaufventil 16, der Linearantrieb 18 zieht den geschlitzten Kolben 1 zurück und Material fällt durch den Einlauftrichter 2 in das Gehäuse 15 und in den Kolbeninnenraum 14. Nach erreichter Startstellung 22 stoppt der Linearantrieb 18, schließt das Einlaufventil 16 und öffnet das Bespannungsventil 23. Der Linearantrieb 18 fährt vor und positioniert den Beginn des unteren Schlitzes 11 exakt mit der Auslaufkante 19. Diese Vorrichtung ist jetzt förderbereit und wartet auf die nächste Schnellumschaltung.

Nachfolgend wird die Funktionsweise einer weiteren erfindungsgemäßen Vorrichtung anhand des in Fig. 7 dargestellten Ausführungsbeispiels einer erfindungsgemäßen Vorrichtung mit ebenfalls geschlitztem Kolben 1 aber mit einer geänderten Einlaufgeometrie näher erläutert.

Wenn der Linearantrieb 18 sein Arbeitshubende 25 erreicht hat, wird der Innenraum entspannt, das Einlaufventil 16 öffnet und Material fließt durch den oberen Schlitz 10 in den vorbei- und zurückfahrenden geschlitzten Kolben 1. Falls der Kolbeninnenraum 14 während der Rückwärtsfahrt nicht komplett mit Material gefüllt wurde, fließt während der langsamen Arbeitsfahrt bei geschlossenem Einlaufventil 16 aus der Materialvorlage 21 Material in den noch nicht komplett gefüllten Kolbeninnenraum 14 und füllt diesen komplett. Alle anderen Funktionen sind der beschriebenen Funktionsweise .der erfindungsgemäßen Vorrichtung gemäß Fig. 2 gleich.

Die beschriebenen Ausführungs- und/oder Anwendungsbeispiele der Erfindung und die in den Figuren der Zeichnung dargestellten und in Zusammenhang mit diesen Ausführungsformen der Erfindung dienen lediglich der Erläuterung der Erfindung und sind für diese nicht beschränkend.

### Bezugszeichenliste:

- 1: geschlitzter Kolben
- 2: Einlauftrichter
- 3: Auslaufkonus
- 4: Abstreiflager
- 5: Dichtlager
- 6: Einlaufbereich
- 7: Auslaufbereich
- 8: Umgehung
- 9: Fördergasventil
- 10: oberer Schlitz
- 11: unterer Schlitz
- 12: hintere Trennwand
- 13: vordere Trennwand
- 14: Kolbeninnenraum
- 15: Gehäuse
- 16: Einlaufventil
- 17: Auslaufventil
- 18: Linearantrieb
- 19: Auslaufkante
- 20: Einlaufstutzen
- 21: Materialvorlage
- 22: Startstellung
- 23: Bespannungsventil
- 24: Entspannungsventil
- 25: Arbeitshubende
- 26: Durchmesser Schlitzbreite d
- 27: Schlitzbreite
- 28: Förderleitung
- 29: Vorlagegefäß
- 30: Waage
- 31: Kompensator
- 32: Vibrator
- 33: Fluidisierungsgasanschluss
- 34: Fluidisierungstrennwand
- 35: Verstellzylinder
- 36: Einlaufstellung
- 37: Plungerkolben

## Patentansprüche

1. Vorrichtung zum Dosieren und/oder Fördern von pulvrigen und/oder rieselfähigen Feststoff-Material
im Nieder- und/oder Hochdruckbereich
aufweisend
ein Gehäuse (15)
mit
wenigstens einem Einlauf (2) mit Einlaufventil (16) in einem Einlaufbereich (6),
wenigstens einem Auslaufkonus (3) mit Auslassventil (17) in einem Auslaufbereich (7) und
wenigstens einem,
wenigstens einen Kolben (1)
geschwindigkeitsgeregelt vor- beziehungsweise zurückbewegend
antreibenden Linearantrieb (18),
**dadurch gekennzeichnet,**
**dass**
der Kolben (1)
wenigstens teilweise als Hohlkörper
mit einem Kolbeninnenraum (14) und zumindest
einer dem Einlauf (2) zugewandten Öffnung (10) und
einer dem Auslauf (3) zugewandten Öffnung (11)
ausgebildet ist,
wobei der Kolben (1) durch ein Dichtlager (5) auf der angetriebenen Seite
getragen und zur Atmosphäre abgedichtet wird und an der nicht angetriebenen Seite durch ein Abstreiflager (4) getragen wird,
welches Abstreiflager (4) den Einlaufbereich (6) vom Auslaufbereich (7) bezüglich Übergang von Feststoff-Material abdichtet,
und **dass** eine den Einlaufbereich und den Auslaufbereich verbindende Umgehung (8) vorhanden ist,
und **dass** ein Entspannungsventil (24) sowie ein Bespannungsventil (23) vorhanden sind zum unter Druck setzen des Einlaufbereich (6) und Auslaufbereich (7) umfassenden Innenraums der Vorrichtung.

2. Vorrichtung gemäß Anspruch 1 aufweisend einen Einlauftrichter als Einlauf (2), , **dadurch gekennzeichnet, dass**
der in Teilen als Hohlkörper ausgeführte geschlitzte Kolben (1)
durch das Dichtlager (5) auf der angetriebenen Seite getragen und zur Atmosphäre abgedichtet wird und an der nicht angetriebenen Seite durch das Abstreiflager (4) getragen wird,
wobei durch das Abstreiflager Material abstreifbar ist,
durch einen oberen Schlitz (10) Material In den Innenraum (14) des geschlitzten Kolbens einfileßbar und aufnehmbar ist
und durch einen unteren Schlitz (11) des geschlitzten Kolbens beim Vorschieben hinter dem Abstreiflager (4) an der Auslaufkante (19) Material ausfließen kann.

3. Vorrichtung nach Anspruch 2, **dadurch gekennzeichnet, dass** der Kolbeninnenraum (14) des geschlitzten Kolbens (1) eine eckige Form mit steilen Flanken aufweist.

4. Vorrichtung nach Anspruch 2, **dadurch gekennzeichnet, dass** der Kolbeninnenraum (14) des geschlitzten Kolbens (1) eine Kombination aus Schrägen und/oder Kreisbögen ist.

5. Vorrichtung nach Anspruch 2, **dadurch gekennzeichnet, dass** der Kolbeninnenraum (14) des geschlitzten Kolbens (1) eine kreisrunde Form aufweist, die durch gerade obere Schlitze (10) und einen unteren Schlitz (11) geöffnet ist.

6. Vorrichtung nach einem der Ansprüche 2 bis 5, **dadurch gekennzeichnet, dass** sie einen Vorlagebehälter (29) mit einer Waage umfasst, mit dem die Materialmenge pro Arbeitshub des geschlitzten Kolbens (1) durch Abzugswägung bestimmbar ist und somit die Austragsmenge des geschlitzten Kolbens (1) pro Strecke bestimmbar ist.

7. Vorrichtung nach Anspruch 6, **dadurch gekennzeichnet, dass** sie einen Kompensator (31) umfasst, durch den das Gewicht des Vorlagebehälters (29) von der Vorrichtung kraftentkoppelbar ist.

8. Vorrichtung nach einem der Ansprüche 2 bis 7, wobei sie eine Materialvorlage (21) aufweist, **dadurch gekennzeichnet, dass** zum sicheren Befüllen ein Vibrator (32) am Einlauftrichter (2), am Gehäuse (15) und/oder an der Materialvorlage (21) angeordnet ist.

9. Vorrichtung nach einem der Ansprüche 2 bis 8, **dadurch gekennzeichnet, dass** der Einlauf ein Einlaufstutzen (20) zur Leitung von Material lokal in den geschlitzten Kolben (1) ist.

10. Vorrichtung nach einem der Ansprüche 2 bis 9, **dadurch gekennzeichnet, dass** der Kolbeninnenraum (14) des geschlitzten Kolbens (1) eine hintere Trennwand (12) und eine vordere Trennwand (13) zum Abgrenzen des Kolbeninnenraumes (14) aufweist.

11. Vorrichtung nach einem der Ansprüche 2 bis 10, **dadurch gekennzeichnet, dass** der geschlitzte Kolben (1) ab dem Dichtlager (5) vom Gehäuse (15) dicht umschlossen ist.

12. Vorrichtung nach einem der Ansprüche 1 bis 14, **dadurch gekennzeichnet, dass** in dem Gehäuse (15) ein atmosphärischer Druck und/oder aber auch ein Druck bis größer gleich 100 bar einstellbar ist.

13. Vorrichtung nach einem der Ansprüche 2 bis 12, **dadurch gekennzeichnet, dass** ein oder beide Schlitze (10) und (11) durch eine
Lochreihe ausgebildet ist/sind.

14. Vorrichtung nach einem der Ansprüche 1 bis 13, **dadurch gekennzeichnet, dass** der Einlaufbereich (6) bzw. der gesamte Bereich des Kolbeninnenraumes (14) rund herum wie ein Sieb bzw. siebähnlich ausgeführt ist.

15. Vorrichtung nach einem der Ansprüche 1 bis 14, **dadurch gekennzeichnet, dass** als vordere Trennwand (13) eine Fluldisierungstrennwand (34) vorgesehen ist.

16. Vorrichtung nach Anspruch 15, **dadurch gekennzeichnet, dass** die Fluidisierungstrennwand (34) durch einen Versteilzylinder (35) so verstellbar ist, dass beim Materialeinlauf der Materialstrom durch die Fluidisierungstrennwand (34) In Einlaufstellung (36) führbar ist, und während des Ausförderns das Material durch Einleitung von Fluidisierungsgas (33) direkt an der Auslaufkante (19) fluidisierbar ist.

17. Vorrichtung nach einem der Ansprüche 15 bis 16, **dadurch gekennzeichnet, dass** mittels Fluidisierungstrennwand (34) eine Abstreiffunktion realisierbar ist, zur Abstreifung von Staubresten, die an der Innenwand des geschlitzten Kolbens (1) nach dem Herausfallen der Materialmengen in den Auslaufkonus (3) an der Innenwand des geschlitzten Kolbens (1) haften geblieben sind.

18. Vorrichtung nach einem der Ansprüche 1 bis 17, **dadurch gekennzeichnet, dass** der Kolben (1) aus Stahl und/oder Keramik ist.

19. Vorrichtung nach einem der Ansprüche 1 bis 18, **dadurch gekennzeichnet, dass** der Linearantrieb (18) ein elektrischer und/oder mechanischer Antrieb, ein Hydraullk- und/oder ein Pneumatikzylinder ist.

20. Vorrichtung nach einem der Ansprüche 2 bis 20, **dadurch gekennzeichnet, dass** es eine pneumatische Vorrichtung zum Dosieren und/oder Fördern von pulvrigen und/oder rieselfähigen Feststoff-Material ist.

21. Vorrichtung nach einem der vorangehenden Ansprüche, **dadurch gekennzeichnet, dass** das pulvrige und/oder rieselfähige Feststoff-Material Pulver, Stäube und/oder Granulate sind.

22. Vorrichtung nach Anspruch 1 oder 2, **dadurch gekennzeichnet, dass** die Vorschubgeschwindigkeit des Kolbens variabel ist.

## Claims

1. Device for dosing and/or conveying of powdery and/or pourable solid material,
in the low and/or high-pressure range,
comprising
a housing (15)
with
at least one inflow (2) having an inflow valve (16) in an inflow region (6),
at least one outflow cone (3) having an outflow valve (17) in an outflow region (7) and
at least one
linear drive (18) driving
at least one piston (1)
with controlled speed and with reciprocation, **characterized in that**
the piston (1)
is at least partly designed
as a hollow body
with a piston interior (14) and at least
one opening (10) facing the inflow (2) and
one opening (11) facing the outflow (3),
wherein the piston (1) is carried by a sealing bearing (5) on the driven side and is sealed from the atmosphere and is carried at the non-driven side by a stripping bearing (4),
which stripping bearing (4) seals the inflow region (6) from the outflow region (7) with respect to the crossover of solid material,
and **in that** there is a bypass (8) which connects the inflow region and the outflow region,
and **in that** there are a venting valve (24) and a pressurizing valve (23) for pressurizing the interior of the device comprising the inflow region (6) and outflow region (7).

2. Device according to Claim 1 having an inflow funnel as an inflow (2), **characterized in that** the slotted piston (1), which is designed in parts as a hollow body, is carried by the sealing bearing (5) on the driven side and is sealed from the atmosphere and is carried at the non-driven side by the stripping bearing (4), wherein material can be stripped by means of the stripping bearing, material can flow into the interior (14) of the slotted piston through an upper slot (10) and can be received therein and material can flow out through a lower slot (11) of the slotted piston during advancement after the stripping bearing (4) at the outflow edge (19).

3. Device according to Claim 2, **characterized in that** the piston interior (14) of the slotted piston (1) has an angular shape which has steep flanks.

4. Device according to Claim 2, **characterized in that** the piston interior (14) of the slotted piston (1) is a combination of slants and/or arcs of a circle.

5. Device according to Claim 2, **characterized in that** the piston interior (14) of the slotted piston (1) has a circular shape which is opened through straight upper slots (10) and a lower slot (11).

6. Device according to one of Claims 2 to 5, **characterized in that** it comprises a storage container (29) having a set of scales with which the amount of material for each working stroke of the slotted piston (1) can be determined by deductive weighing and thus the discharge amount of the slotted piston (1) can be determined for each section.

7. Device according to Claim 6, **characterized in that** it comprises a compensator (31), through which the weight of the storage container (29) can be force-uncoupled from the device.

8. Device according to one of Claims 2 to 7, wherein it has a material store (21), **characterized in that** a vibrator (32) is arranged on the inflow funnel (2), on the housing (15) and/or on the material store (21) for the purpose of safe filling.

9. Device according to one of Claims 2 to 8, **characterized in that** the inflow is an inflow connecting piece (20) for passing material locally into the slotted piston (1).

10. Device according to one of Claims 2 to 9, **characterized in that** the piston interior (14) of the slotted piston (1) comprises a rear partition (12) and a front partition (13) for demarcating the piston interior (14).

11. Device according to one of Claims 2 to 10, **characterized in that** the slotted piston (1) is tightly surrounded, from the sealing bearing (5), by the housing (15).

12. Device according to one of Claims 1 to 14, **characterized in that** an atmospheric pressure and/or else a pressure of up to equal to or greater than 100 bar can be set in the housing (15).

13. Device according to one of Claims 2 to 12, **characterized in that** one or both slots (10) and (11) is/are formed by a series of holes.

14. Device according to one of Claims 1 to 13, **characterized in that** the inflow region (6) or the entire region of the piston interior (14) is designed all the way round like a sieve or in a sieve-like manner.

15. Device according to one of Claims 1 to 14, **characterized in that** a fluidization partition (34) is provided as a front partition (13).

16. Device according to Claim 15, **characterized in that** the fluidization partition (34) can be adjusted by an adjustment cylinder (35) in such a way that, during the inflow of material, the flow of material can be guided through the fluidization partition (34) in the inflow position (36) and, during the outward conveying, the material can be fluidized by introducing fluidization gas (33) directly at the outflow edge (19).

17. Device according to one of Claims 15 to 16, **characterized in that** by means of the fluidization partition (34) a stripping function can be performed, for stripping dust remnants, which at the inner wall of the slotted piston (1) have clung, after the falling-out of the amounts of material into the outflow cone (3), to the inner wall of the slotted piston (1).

18. Device according to one of Claims 1 to 17, **characterized in that** the piston (1) is made of steel and/or ceramic.

19. Device according to one of Claims 1 to 18, **characterized in that** the linear drive (18) is an electric and/or mechanical drive, a hydraulic and/or a pneumatic cylinder.

20. Device according to one of Claims 2 to 20, **characterized in that** it is a pneumatic device for dosing and/or conveying of powdery and/or pourable solid material.

21. Device according to one of the preceding claims, **characterized in that** the powdery and/or pourable solid material is powders, dusts and/or granules.

22. Device according to Claim 1 or 2, **characterized in that** the speed of advancement of the piston is variable.

## Revendications

1. Dispositif de dosage et/ou de transport de matières solides pulvérulentes et/ou aptes à l'écoulement
dans la plage basse et/ou haute pression
comprenant
un carter (15)
présentant
au moins une entrée (2) avec une vanne d'entrée (16) dans une zone d'entrée (6),
au moins un cône de sortie (3) avec une vanne de sortie (17) dans une zone de sortie (7), et
au moins une commande linéaire (18)
entraînant à vitesse réglée, vers l'avant ou vers l'arrière, au moins un piston (1),
**caractérisé**
**en ce que** le piston (1)
est réalisé, au moins en partie, sous forme de corps creux présentant un espace intérieur de piston (14) et au moins une ouverture (10) tournée vers l'entrée (2) et
une ouverture (11) tournée vers la sortie (3),
le piston (1) étant porté sur le côté entrainé par un palier étanche et étant rendu étanche par rapport à l'atmosphère, et étant porté sur le côté non entraîné par un palier de raclage (4),
lequel palier de raclage (4) assure l'étanchéité de la zone d'entrée par rapport à la zone de sortie en termes de transition de matières solides,
et **en ce qu'**il est prévu une dérivation (8) reliant la zone d'entrée et la zone de sortie,
et **en ce qu'**il est prévu une vanne de détente (24) ainsi qu'une vanne de mise sous contrainte (23) pour mettre en pression l'espace intérieur du dispositif comprenant la zone d'entrée (6) et la zone de sortie (7).

2. Dispositif selon la revendication 1 présentant une trémie d'entrée comme entrée (2), **caractérisé en ce que** le piston à fentes (1), réalisé en partie sous forme de corps creux,
est porté sur le côté entrainé par le palier étanche (5) et est rendu étanche par rapport à l'atmosphère, et est porté sur le côté non entraîné par le palier de raclage (4),
le palier de raclage (4) permettant d'éliminer de la matière par raclage,
une fente supérieure (10) permettant à la matière de couler et d'être reçue dans l'espace intérieur (14) du piston à fentes, et une fente inférieure (11) du piston à fentes, lorsque celui-ci avance, permettant à la matière de s'écouler sur le bord de décharge (19) derrière le palier de raclage (4).

3. Dispositif selon la revendication 2, **caractérisé en ce que** l'espace intérieur (14) du piston à fentes (1) présente une forme anguleuse avec des flancs abrupts.

4. Dispositif selon la revendication 2, **caractérisé en ce que** l'espace intérieur (14) du piston à fentes (1) est une combinaison d'obliquités et/ou d'arcs de cercle.

5. Dispositif selon la revendication 2, **caractérisé en ce que** l'espace intérieur (14) du piston à fentes (1) présente une forme circulaire, ouverte par des fentes supérieures droites (10) et une fente inférieure (11).

6. Dispositif selon l'une des revendications 2 à 5, **caractérisé en ce qu'**il comprend un récipient collecteur (29) équipé d'une balance, qui permet de déterminer, par pesée de la matière soutirée, la quantité de matière par course de travail du piston à fentes (1) et, par voie de conséquence, le débit du piston à fentes (1) par trajet.

7. Dispositif selon la revendication 6, **caractérisé en ce qu'**il comprend un compensateur (31) permettant de découpler mécaniquement le poids du récipient collecteur (29) du dispositif.

8. Dispositif selon l'une des revendications 2 à 7, le dispositif comprenant un collecteur de matière (21), **caractérisé en ce que**, pour assurer un remplissage en toute sécurité, un vibreur (32) est monté sur la trémie d'entrée (2), sur le carter (15) et/ou sur le collecteur de matière (21).

9. Dispositif selon l'une des revendications 2 à 8, **caractérisé en ce que** l'entrée est une tubulure d'entrée (20) pour conduire la matière localement dans le piston à fentes (1).

10. Dispositif selon l'une des revendications 2 à 9, **caractérisé en ce que** l'espace intérieur (14) du piston à fentes (1) comporte une cloison arrière (12) et une cloison avant (13) pour délimiter l'espace intérieur de piston (14).

11. Dispositif selon l'une des revendications 2 à 10, **caractérisé en ce que** le piston à fentes (1) est entouré de manière étanche par le carter (15) à partir du palier étanche (5).

12. Dispositif selon l'une des revendications 1 à 14, **caractérisé en ce qu'**il est possible de régler une pression atmosphérique et/ou aussi une pression supérieure ou égale à 100 bar dans le carter (15).

13. Dispositif selon l'une des revendications 2 à 12, **caractérisé en ce qu'**une ou les deux fentes (10) et (11) sont formées par une rangée de trous.

14. Dispositif selon l'une des revendications 1 à 13, **caractérisé en ce que** la zone d'entrée (6), respectivement la totalité de l'espace intérieur de piston (14) tout autour, est réalisée comme un tamis ou est semblable à un tamis.

15. Dispositif selon l'une des revendications 1 à 14, **caractérisé en ce qu'**il est prévu, comme cloison avant (13), une cloison de fluidisation (34).

16. Dispositif selon la revendication 15, **caractérisé en ce que** la cloison de fluidisation (34) peut être réglée par un vérin de réglage (35) de telle façon que, pendant l'admission de la matière, le flux de matière peut être amené en position d'admission (36) par la cloison de fluidisation (34) et, pendant le déchargement, la matière peut être fluidisée directement sur le bord de décharge (19) par injection d'un gaz de fluidisation (33).

17. Dispositif selon l'une des revendications 15 à 16, **caractérisé en ce que** la cloison de fluidisation (34) permet de réaliser une fonction de raclage (34) pour éliminer par raclage des résidus de poussières qui sont restés collés sur la paroi intérieure du piston à fentes (1) après l'éjection des quantités de matière dans le cône de sortie (3).

18. Dispositif selon l'une des revendications 1 à 17, **caractérisé en ce que** le piston (1) est en acier et/ou céramique.

19. Dispositif selon l'une des revendications 1 à 18, **caractérisé en ce que** la commande linéaire (18) est une commande électrique et/ou mécanique, un vérin hydraulique et/ou pneumatique.

20. Dispositif selon l'une des revendications 2 à 20, **caractérisé en ce que** le dispositif est un dispositif pneumatique de dosage et/ou de transport de matières solides pulvérulentes et/ou aptes à l'écoulement.

21. Dispositif selon l'une des revendications précédentes, **caractérisé en ce que** les matières solides pulvérulentes et/ou aptes à l'écoulement sont des poudres, des poussières et/ou des granulés.

22. Dispositif selon la revendication 1 ou 2, **caractérisé en ce que** la vitesse d'avancement du piston est variable.
